# FASCICULE DE BREVET EUROPEEN

(11) **EP 3 601 851 B1**
(45) Date de publication et mention de la délivrance du brevet: **14.07.2021**
(21) Numéro de dépôt: 18713305.3
(22) Date de dépôt: 01.03.2018
(51) Int. Cl.: F16H 63/30

(54) **BOÎTE DE VITESSES À VIBRATIONS RÉDUITES**
GETRIEBE MIT REDUZIERTER SCHWINGUNG
REDUCED VIBRATION GEARBOX

(30) Priorité: 27.03.2017 FR 1752507
(43) Date de publication de la demande: 05.02.2020
(73) Titulaire: PSA Automobiles SA, 78300 Poissy (FR)
(72) Inventeur: MATIAS, Carlos, 95100 Argenteuil (FR)
(86) Numéro de dépôt international: PCT/FR2018/050476
(87) Numéro de publication internationale: WO 2018/178529

(56) Documents cités:
- EP-A2- 1 205 692
- US-A1- 2009 320 635

## Description

L'invention s'inscrit, en matière automobile, dans le domaine des boîtes de vitesses manuelles à doigt de commande et fourchette de passage de rapport de vitesses.

Dans ces boîtes de vitesses, il apparaît des vibrations, initiées par le moteur, et transmises du fait des contacts entre le doigt de commande et la fourchette utilisée pour engager un rapport de vitesses. Il en résulte des mouvements du pommeau de commande du rapport de vitesses, ce qui n'est pas souhaitable.

Pour résoudre ce problème, on peut introduire un jeu, ou augmenter un jeu existant, entre la fourchette et le doigt de commande. Mais la conséquence d'une telle démarche est l'augmentation de la course de passage de rapport de vitesses ou l'augmentation de l'effort nécessaire pour le passage du rapport.

Le document EP1205692 décrit un doigt de commande avec un système de ressort intégré, mais qui implique une complexité de construction qui n'est pas compatible avec toutes les boîtes de vitesses proposées à coûts maîtrisés.

Pour résoudre ce problème il est proposé un système de commande de passage de rapport de vitesses, pour boîte de vitesses, ce système comprenant un arbre de commande de passage de rapport de vitesses et une crosse de fourchette, cet arbre comprenant une grille pour être monté en rotation par rapport à un carter de boîte de vitesses avec butée, l'arbre comprenant un doigt disposé radialement sur l'arbre pour interagir avec la crosse de fourchette pour coupler des arbres d'entrée et de sortie de puissance de la boîte par l'un ou l'autre de deux couples de pignons correspondant chacun à un rapport de vitesses, ou découpler lesdits arbres en libérant un des pignons vis-à-vis d'un desdits arbres, le doigt appuyant sur la crosse de fourchette pour procéder à des couplements ou des découplements, par l'intermédiaire de deux surfaces cylindriques de génératrice convexe opposées selon une symétrie planaire.

Selon l'invention, les surfaces de génératrice convexe du doigt ont une section distale la plus lointaine de l'arbre de commande et une section proximale près de l'arbre de commande, cette section distale ayant une courbure constante pour appuyer sur la crosse de fourchette lors d'une rotation du doigt pour engager un premier des deux rapports, et cette section proximale ayant un profil plus plat que celui de la section distale pour dégager un espace entre la surface d'appui de la fourchette correspondante et le doigt après une rotation du doigt pour engager le deuxième des deux rapports.

Grâce à ces principes, il est possible de conserver une course de passage réduite avec cependant une augmentation du jeu en rapport de vitesses engagé et transmission de puissance. Ceci permet de réduire ou supprimer les vibrations du pommeau liées au mouvement des éléments de la chaîne de traction.

Selon des caractéristiques avantageuses et optionnelles :
- la section proximale de profil plus plat est un méplat.
- ou la section proximale de profil plus plat est une section de rayon de courbure constant.

Il est aussi proposé une boîte de vitesses pour véhicule automobile comprenant un système de commande de passage de rapport de vitesses selon les principes énoncés ci-dessus pour le passage des vitesses par un conducteur du véhicule agissant directement à la main sur l'arbre.

Il est aussi proposé un procédé d'adaptation d'une boîte de vitesses pour diminuer les vibrations, la boîte de vitesses comprenant un doigt disposé radialement sur un arbre de commande de passage des rapports de vitesses, ledit arbre comprenant une grille et étant monté en rotation avec butée par rapport à un carter de boîte de vitesses, la boîte comprenant de plus une crosse de fourchette montée en translation par rapport audit carter pour coupler des arbres d'entrée et de sortie de puissance de la boîte par l'un ou l'autre de deux couples de pignons correspondant chacun à un rapport de vitesses, ou découpler lesdits arbres en libérant un des pignons vis-à-vis d'un desdits arbres, la crosse de fourchette comprenant, opposées selon une symétrie planaire, deux surfaces d'appui sur lesquelles le doigt appuie respectivement pour procéder au couplement ou au découplement, par l'intermédiaire, respectivement, de deux surfaces cylindriques de génératrice convexe opposées selon la même symétrie planaire.

Selon l'invention, les surfaces de génératrice convexe ont une section distale de courbure constante pour appuyer sur la surface d'appui correspondante lors d'une rotation du doigt pour engager un premier des deux rapports et le procédé d'adaptation est tel qu'on enlève de la matière pour définir une section proximale de profil plus plat que celui de la section distale pour dégager un espace entre la surface d'appui de la fourchette correspondante et le doigt après une rotation du doigt pour engager un deuxième des deux rapports.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue d'un système existant dans lequel vient s'inscrire l'invention ;
- les figures 2A et 2B sont des vues de détail de ce système, dans une première position ;
- les figures 3A et 3B sont des vues de détail de ce système, dans une deuxième position ;
- les figures 4A et 4B sont des vues de détail de ce système, dans une troisième position ;
- les figures 5A, 5B et 5C sont des vues de détail d'un mode de réalisation, dans des positions correspondant aux première, deuxième et troisième positions évoquées plus haut.

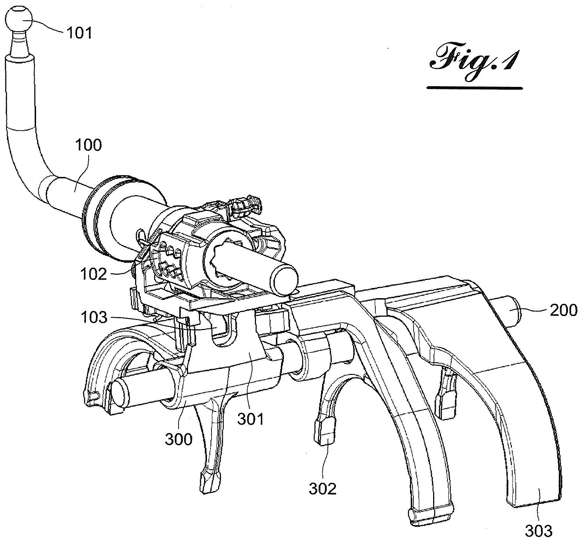

En figure 1, on a représenté les éléments, concernés par l'invention, d'une boîte de vitesses manuelle de véhicule automobile, comprenant cinq rapports de vitesses de marche avant et un rapport de marche arrière.

Le système comprend un arbre de commande 100 manoeuvré par l'intermédiaire d'une rotule de passage 101 déplacée par le conducteur via un levier de passage de vitesses. L'arbre de commande 100 est monté en translation et en rotation vis-à-vis d'un carter (non représenté) de la boîte de vitesses. L'arbre de commande 100 porte un doigt de passage 103 monté fixe et positionné radialement par rapport audit arbre. Un axe 200 est disposé perpendiculairement à l'arbre de commande 100 et porte trois fourchettes 300, 302 et 303, qui sont montées sur lui en translation.

Chacune de ces fourchettes est destinée au passage de deux rapports de vitesses par engagement, lors de la translation dans un sens ou dans l'autre de la fourchette le long de l'axe 200, d'un couple de pignons parmi deux couples de pignons pour le couplage en rotation de l'arbre primaire et de l'arbre secondaire de puissance de la boîte de vitesses. Le couple de pignons choisi et engagé détermine le rapport de vitesses. La fourchette est également en mesure de découpler les arbres de puissance l'un de l'autre en libérant un desdits pignons vis-à-vis d'un desdits arbres de puissance, ramenant alors la transmission au point mort.

Chacune des fourchettes porte une crosse de fourchette, susceptible d'interagir avec le doigt de passage 103. C'est l'interaction entre le doigt 103 et la crosse de fourchette qui amène la fourchette à se mouvoir en translation le long de l'axe 200, et à engager ou désengager un rapport de vitesses. La fourchette à utiliser est sélectionnée par un mouvement de translation de l'arbre de commande 100 qui amène le doigt 103 au droit de la crosse d'une première fourchette, puis d'une deuxième fourchette, puis de la troisième fourchette, selon l'amplitude de la translation. Quand une fourchette est sélectionnée, le rapport de vitesses parmi les deux rapports de vitesses que la fourchette commande est sélectionné par le sens de rotation de l'arbre de commande 100 vis-à-vis du carter.

Le mouvement de l'arbre de commande est limité par une grille interne 102 qui porte des dessins en relief qui interagissent avec une butée portée par le carter. L'interaction du dessin de la grille et de la butée portée par le carter permet au conducteur d'être aidé (guidé) dans le passage des rapports de vitesses.

Sur la figure, seule la crosse de la fourchette 300, référencée 301, est visible. Elle cache les crosses des fourchettes 302 et 303. Sur la figure toujours, le doigt 103 est un peu en retrait de la crosse 301, et est au droit de l'une des deux autres crosses.

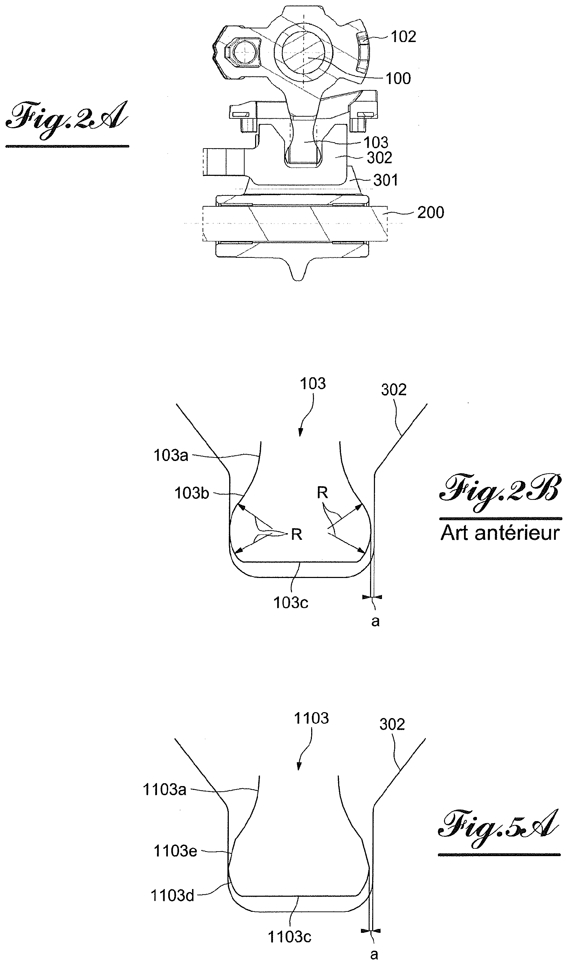

En figure 2A, on a représenté le système selon l'art antérieur au point mort. La figure est une coupe perpendiculaire à l'arbre de commande 100, au niveau du doigt 103. L'arbre de commande 100 est avancé (ou reculé) en translation pour interagir avec la crosse de la fourchette 302. L'arbre de commande 100 est positionné à un angle, vis-à-vis du carter, qui correspond au point mort : aucun des deux rapports de vitesses commandés par cette fourchette n'est engagé. Le doigt 103 et la crosse de la fourchette 302 ont chacun une forme cylindrique de directrice l'axe de l'arbre de commande 100 et de génératrice les formes visibles dans la figure.

Le doigt 103 est placé au sein de la crosse de la fourchette 302, qui a une forme de u minuscule (c'est-à-dire un peu écrasé) entourant le doigt 103. La crosse 301 de la fourchette 300 est visible en arrière-plan, et l'axe 200 est également visible, en coupe. On voit sur cette figure d'ensemble que si l'arbre 100 tourne dans un sens, la fourchette 302 glissera en translation dans une direction parallèlement à l'axe 200, ce qui aura pour conséquence d'engager un rapport de vitesses, et que si l'arbre 100 tourne dans l'autre sens, la fourchette 302 glissera en translation dans la direction opposée, toujours parallèlement à l'axe 200, ce qui aura pour conséquence d'engager un autre rapport de vitesses. Il est précisé que l'amplitude de la rotation de l'arbre de commande 100 est déterminée par l'interaction d'une butée de grille solidaire du carter et de la grille 102 portée par l'arbre de commande 100.

En figure 2B on a représenté le doigt 103 au sein de la crosse de la fourchette 302, en plus gros plan, la vue étant une section selon le même plan que celui de la vue de coupe de la figure 2a. On observe que la crosse définit un espace en forme d'intérieur de u minuscule, et que le doigt comprend une section proximale (près de l'arbre de commande 100) référencée 103 qui est plus mince (essentiellement c'est une tige concave s'élargissant en s'éloignant de l'arbre 100) qu'une section convexe 103b intermédiaire, elle-même plus large qu'une section distale (la plus lointaine de l'arbre de commande 100), référencée 103c (il s'agit d'une terminaison). Le doigt 103 dans sa position au neutre admet la même symétrie planaire que l'espace intérieur du u de la crosse de la fourchette 302. La section 103b possède, sur chacune de ses faces qui se déduisent l'une de l'autre par cette symétrie planaire, une courbure constante de rayon de courbure R.

Les dimensions du doigt 103 et celles de la fourchette 302 sont telles qu'un jeu de valeur a est présent dans la direction de translation de la fourchette 302, c'est-à-dire parallèlement à l'axe 200. Quelles que soient les vibrations du système, quand la surface du doigt 102 entre en contact avec la surface de la fourchette 302, c'est sur l'une des surfaces de la section convexe 103b de courbure constante, à gauche, ou à droite du doigt 103.

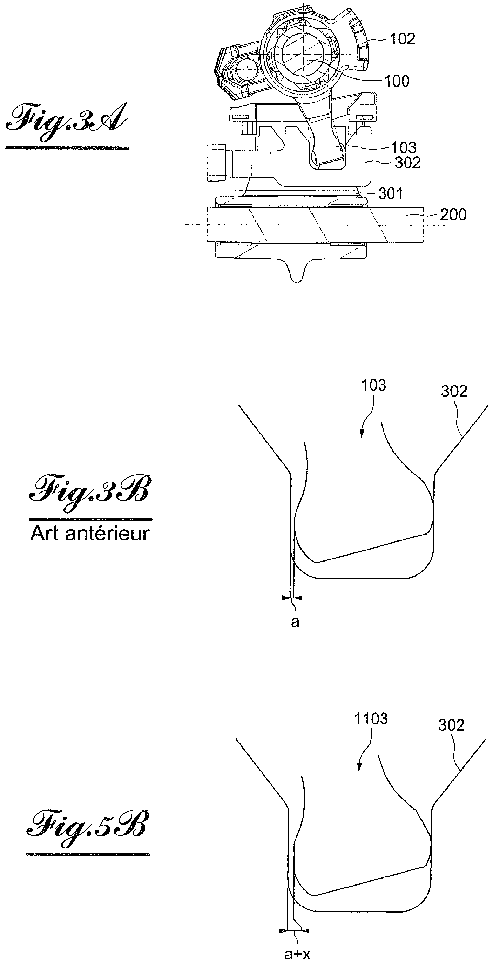

En figure 3A on a représenté les éléments précédents, selon l'art antérieur, après rotation de l'arbre de commande 100 pour l'engagement d'un rapport de vitesses, avec déplacement de la fourchette 302 vers la droite de la figure. La butée fixée au carter s'oppose, via la grille 102, à une plus grande rotation de l'arbre de commande 100.

On voit en figure 3B que la surface de courbure constante de la section 103b a appuyé sur la fourchette 302 dans la direction de la droite. La surface de courbure constante est au contact de la surface de la fourchette à droite, du côté dans le sens duquel la fourchette a été poussée, et plutôt du côté distal du doigt (loin de l'arbre de commande 100). Le jeu est toujours de la valeur a, malgré la rotation du doigt, du fait de la courbure constante des surfaces de la section convexe 103b.

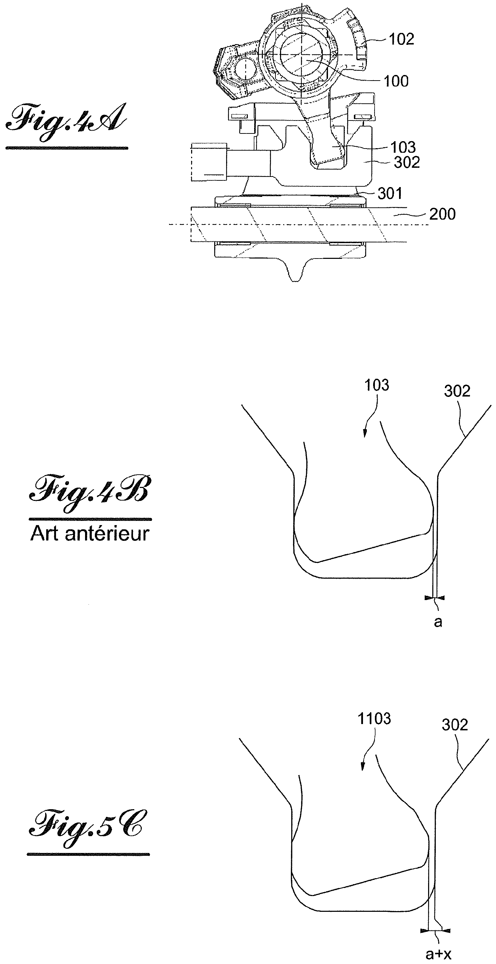

En figures 4A et 4B on a représenté les éléments précédents, selon l'art antérieur, après arrivée de la fourchette 302 sur la butée du pignon, par l'action des systèmes de retenu dits « anti-lâchers ». Ainsi, la fourchette a poursuivi légèrement la translation qu'elle avait suivi entre les figures 2A et 2B d'une part et 3A et 3B d'autre part. La surface de courbure constante est au contact de la surface de la fourchette à gauche, du côté opposé au sens dans lequel la fourchette a été poussée, et plutôt du côté proximal du doigt (à proximité de l'arbre de commande 100). Le jeu est toujours de la valeur a, malgré le changement de côté, du fait de la courbure constante des surfaces de la section convexe 103b.

Du fait des vibrations, le système peut bouger entre la position extrême de la figure 2B et la position extrême de la figure 3B. Le jeu, toujours mesuré suivant la direction parallèle à l'axe 200, est toujours de la valeur a.

En figures 5A à 5C, on a représenté l'invention. La figure 5A correspond à la position de l'arbre de commande 100 représentée en figure 2A et 2B, la figure 5B correspond à la position de l'arbre de commande 100 représentée en figure 3A et 3B, et la figure 5C correspond à la position de l'arbre de commande 100 représentée en figure 4A et 4B.

La figure 5A représente les éléments de l'invention, qui sont similaires aux précédents (les références relatives au doigt sont incrémentées de 1000), à l'exception du fait que la section convexe 103b de surfaces de rayon de courbure constant a été modifiée et remplacée par une partie convexe proximale 1103e et une partie convexe distale 1103d (toujours définie par rapport à l'arbre de commande). Le doigt 1103 a une forme cylindrique de directrice l'axe de l'arbre de commande 100 et de génératrice les formes visibles à la figure.

La partie convexe distale 1103d a des surfaces qui sont identiques à la partie distale de la partie convexe 103b de l'art antérieur, c'est-à-dire ayant un rayon de courbure constant.

La partie convexe proximale 1103e a un rayon de courbure supérieur à celui de la partie intermédiaire distale 1103d, voire infini. Dans le mode de réalisation présenté, il est infini, c'est-à-dire que la partie convexe proximale 1103e a une surface qui est un méplat, obtenu par suppression (ou enlèvement) de matière par rapport à la précédente géométrie, de l'art antérieur. Il s'agit alors d'une adaptation de la boîte de vitesses pour diminuer les vibrations.

Il ressort de cette caractéristique de l'invention que lorsque le doigt est en position de point mort comme en figure 5A, le jeu est de la valeur a. Cela vient du fait que la limite entre les parties convexes proximales et distales 1103e et 1103d est telle que dans cette position du doigt, la largeur maximale de celui-ci, mesurée parallèlement à l'axe 200, est inchangée, malgré la modification par rapport à l'art antérieur.

En figure 5B, on a représenté le système selon l'invention dans la même situation que celui de l'art antérieur en figures 3B. Ainsi après rotation de l'arbre de commande 100 pour l'engagement d'un rapport de vitesse, on obtient le déplacement de la fourchette 302 vers la droite de la figure. La butée fixée au carter s'oppose, via la grille 102, à une plus grande rotation de l'arbre de commande 100. On voit que la surface de courbure constante de la section convexe distale 1103d a appuyé sur la fourchette 302 dans la direction de la droite. La surface de courbure constante (section distale 1103d) est au contact de la surface de la fourchette 302 à droite, du côté dans le sens duquel la fourchette a été poussée. Le jeu est d'une valeur a + x, du fait de la rotation du doigt, à cause du méplat de la surface de la section convexe proximale 1103e du côté gauche.

En figures 5C, on a représenté le système selon l'invention dans la même situation que celui de l'art antérieur en figures 4B, après arrivée de la fourchette 302 sur la butée du pignon, par l'action des systèmes de retenu dits « anti-lâchers ». Ainsi, la fourchette 302 a poursuivi légèrement la translation qu'elle avait suivi entre les figures 5A et 5B. Le méplat (section proximale 1103e) est au contact de la surface de la fourchette à gauche, du côté opposé au sens dans lequel la fourchette a été poussée. Le jeu est toujours de la valeur a +x.

Du fait des vibrations, le système peut bouger entre la position extrême de la figure 5B et la position extrême de la figure 5C. Le jeu, toujours mesuré suivant la direction parallèle à l'axe 200, est toujours de la valeur a + x.

A la place d'un méplat, la partie convexe proximale 1103e peut avoir une courbure variable d'une extrémité à l'autre, en tout état de cause supérieure à celle de la partie convexe distale 1103d, ou fixe, à nouveau avec une valeur supérieure à celle de la partie convexe distale 1103d.

## Revendications

1. Système de commande de passage de rapport de vitesses, pour boîte de vitesses, ledit système comprenant un arbre de commande (100) de passage de rapport de vitesses et une crosse de fourchette (302), ledit arbre (100) comprenant une grille pour être monté en rotation par rapport à un carter de boîte de vitesses avec butée, l'arbre comprenant un doigt (1103) disposé radialement sur l'arbre (100) pour interagir avec la crosse de fourchette (302) pour coupler des arbres d'entrée et de sortie de puissance de la boîte par l'un ou l'autre de deux couples de pignons correspondant chacun à un rapport de vitesses, ou découpler lesdits arbres en libérant un des pignons vis-à-vis d'un desdits arbres, le doigt (1103) appuyant sur la crosse de fourchette pour procéder à des couplements ou des découplements, **caractérisé en ce que** le doigt appuie sur la crosse de fourchette par l'intermédiaire de deux surfaces cylindriques de génératrice convexe (1103d, 1103e) opposées selon une symétrie planaire, les surfaces de génératrice convexe (1103d, 1103e) du doigt (1103) ayant une section distale (1103d) la plus lointaine de l'arbre de commande (100) et une section proximale (1103e) près de l'arbre de commande (100), ladite section distale (1103d) ayant une courbure constante pour appuyer sur la crosse de fourchette lors d'une rotation du doigt (1103) pour engager un premier des deux rapports, et ladite section proximale (1103e) ayant un profil plus plat que celui de la section distale pour dégager un espace entre la surface d'appui de la fourchette (302) correspondante et le doigt (1103) après une rotation du doigt (1103) pour engager le deuxième des deux rapports.

2. Système selon la revendication 1, **caractérisé en ce que** la section proximale (1103e) de profil plus plat est un méplat.

3. Système selon la revendication 1, **caractérisé en ce que** la section proximale (1103e) de profil plus plat est une section de rayon de courbure constant.

4. Boîte de vitesses pour véhicule automobile comprenant un système de commande de passage de rapport de vitesses selon l'une des revendications 1 à 3 pour le passage des vitesses par un conducteur du véhicule.

5. Procédé d'adaptation d'une boîte de vitesses pour diminuer les vibrations, la boîte de vitesses comprenant un doigt (1103) disposé radialement sur un arbre (100) de commande de passage des rapports de vitesses, ledit arbre (100) comprenant une grille et étant monté en rotation avec butée par rapport à un carter de boîte de vitesses, la boîte comprenant aussi une crosse de fourchette (302) montée en translation par rapport audit carter pour coupler des arbres d'entrée et de sortie de puissance de la boîte par l'un ou l'autre des deux couples de pignons correspondant chacun à un rapport de vitesses, ou découpler lesdits arbres en libérant un des pignons vis-à-vis d'un desdits arbres, la crosse de fourchette (302) comprenant, opposées selon une symétrie planaire, deux surfaces d'appui sur lesquelles le doigt appuie respectivement pour procéder au couplement ou au découplement, **caractérisé en ce que** le doigt appuie sur les deux surfaces d'appui de la crosse de fourchette par l'intermédiaire, respectivement, de deux surfaces cylindriques de génératrice convexe (1103d, 1103e) opposées selon la même symétrie planaire, les surfaces de génératrice convexe (1103d, 1103e) ayant une section distale de courbure constante (1103d) pour appuyer sur la surface d'appui correspondante lors d'une rotation du doigt (1103) pour engager un premier des deux rapports et le procédé est tel qu'on enlève de la matière pour définir une section proximale (1103e) de profil plus plat que celui de la section distale de courbure constante (1103d) pour dégager un espace entre la surface d'appui de la fourchette (302) correspondante et le doigt (1103) après une rotation du doigt (1103) pour engager un deuxième des deux rapports.

## Patentansprüche

1. Ein Schaltsteuerungssystem für ein Getriebe, wobei das System eine Schaltsteuerwelle (100) und eine Gabelhalterung (302) umfasst, wobei die Welle (100) ein Gitter zur drehbaren Montage relativ zu einem Getriebegehäuse mit Anschlag, der Welle, umfasst einschließlich eines Fingers (1103), der radial auf der Welle (100) angeordnet ist, um mit der Jochhalterung (302) in Wechselwirkung zu treten, um die Eingangswellen und die Leistungsabgabe des Kastens durch das eine oder andere von zwei Ritzelpaaren zu koppeln, die jeweils einem Übersetzungsverhältnis entsprechen, oder die Wellen entkoppeln, indem eines der Ritzel gegenüber einer der Wellen gelöst wird, wobei der Finger (1103) auf den Gabelgriff drückt, um Kupplungen oder Entkopplungen durchzuführen; **dadurch gekennzeichnet, dass** der Finger über zwei in planarer Symmetrie entgegengesetzte zylindrische Flächen der konvexen Generatrix (1103d, 1103e) auf den Gabelgriff drückt, wobei die konvexen Generatrixflächen (1103d, 1103e) des Fingers (1103) haben einen distalen Abschnitt (1103d), der am weitesten von der Antriebswelle (100) und einem proximalen Abschnitt (1103e) nahe der Antriebswelle (100) entfernt ist, wobei der distale Abschnitt (1103d) eine konstante Krümmung aufweist, um den Gabelgriff bei Drehung des Fingers (1103), um einen ersten der beiden Zahnräder in Eingriff zu bringen, und wobei der proximale Abschnitt (1103e) ein Profil aufweist, das flacher als das des distalen Abschnitts ist, um einen Raum zwischen der Auflagefläche der entsprechenden Gabel (302) und dem Finger (1103) danach bereitzustellen eine Drehung des Fingers (1103), um den zweiten der beiden Berichte zu aktivieren.

2. System nach Anspruch 1, **dadurch gekennzeichnet, dass** der proximale Abschnitt (1103e) des flacheren Profils flach ist.

3. System nach Anspruch 1, **dadurch gekennzeichnet, dass** der proximale Abschnitt (1103e) des flacheren Profils ein Abschnitt mit konstantem Krümmungsradius ist.

4. Getriebe für ein Kraftfahrzeug mit einem Schaltsteuersystem nach einem der Ansprüche 1 bis 3 zum Schalten durch einen Fahrer des Fahrzeugs.

5. Verfahren zum Anpassen eines Getriebes, um Vibrationen zu reduzieren, wobei das Getriebe einen Finger (1103) umfasst, der radial auf einer Schaltsteuerwelle (100) angeordnet ist, wobei die Welle (100) ein Gitter umfasst und in Rotation mit einem Anschlag relativ zu einem Getriebegehäuse montiert ist, das Getriebe umfasst auch eine Gabelhalterung (302), die in Bezug auf das Gehäuse in Translation montiert ist, um die Eingangs und Ausgangsleistungswellen des Getriebes mit dem einen oder anderen der beiden Ritzelpaare zu koppeln, die jeweils einem Drehzahlverhältnis entsprechen, oder die Wellen zu entkoppeln durch Lösen eines der Ritzel gegenüber einer der Wellen, wobei die Gabelhalterung (302) gegenüberliegend in planarer Symmetrie zwei Lagerflächen aufweist, auf die der Finger jeweils drückt, um mit der Kupplung oder Entkupplung fortzufahren, die **dadurch gekennzeichnet ist, dass** die Finger drückt über den Vermittler auf die beiden Lagerflächen des Gabelhalters jeweils aus zwei konvexen Erzeugenden zylindrischen Oberflächen (1103d, 1103e) gegenüber in der gleichen planaren Symmetrie, die konvex Erzeugende Flächen (1103d, 1103e), die auf der Oberfläche einen distalen Abschnitt mit konstanter Krümmung (1103d) zu drücken Unterstützung des entspricht, die während eine Drehung des Fingers (1103), um einen ersten der beiden Berichte in Eingriff zu bringen, und das Verfahren ist derart, dass Material entfernt wird, um einen proximalen Abschnitt (1103e) des Profils zu definieren, der flacher ist als der des distalen Abschnitts mit konstanter Krümmung (1103d), um ihn freizugeben einen Abstand zwischen der Auflagefläche der entsprechenden Gabel (302) und dem Finger (1103) nach einer Drehung des Fingers (1103), um einen zweiten der beiden Berichte in Eingriff zu bringen.

## Claims

1. A gear shift control system, for a gearbox, said system comprising a gear shift control shaft (100) and a fork bracket (302), said shaft (100) comprising a grid to be mounted for rotation with respect to a gearbox housing with stopper, the shaft comprising a finger (1103) disposed radially on the shaft (100) for interacting with the fork bracket (302) for coupling shafts of power input and output of the box by one or the other of two pairs of pinions each corresponding to a gear ratio, or decouple said shafts by releasing one of the pinions vis-à-vis one of said shafts , the finger (1103) pressing on the fork holder to perform couplings or decouplings, **characterized in that** the finger presses on the fork grip via two cylindrical surfaces of convex generatrix (1103d, 1103e) opposite in planar symmetry, the convex generatrix surfaces (1103d, 1103e) of the finger (1103) having a distal section (1103d) furthest from the drive shaft (100) and a proximal section (1103e) near the drive shaft (100), said distal section (1103d) having a constant curvature to press the fork grip upon rotation of the finger (1103) to engage a first of the two gears, and said proximal section (1103e) having a profile flatter than that of the distal section to provide a space between the bearing surface of the corresponding fork (302) and the finger (1103) after a rotation of the finger (1103) to engage the second of the two reports.

2. System according to claim 1, **characterized in that** the proximal section (1103e) of flatter profile is a flat.

3. System according to claim 1, **characterized in that** the proximal section (1103e) of flatter profile is a section of constant radius of curvature.

4. Gearbox for a motor vehicle comprising a gear shift control system according to one of claims 1 to 3 for the gear changing by a driver of the vehicle.

5. A method of adapting a gearbox to reduce vibrations, the gearbox comprising a finger (1103) disposed radially on a shaft (100) for controlling the shifting of gear ratios, said shaft (100) comprising a grid and being mounted in rotation with a stop relative to a gearbox housing, the box also comprising a fork bracket (302) mounted in translation with respect to said housing to couple input and output power shafts of the box by one or the other of the two pairs of pinions each corresponding to a gear ratio, or decouple said shafts by releasing one of the pinions vis-à-vis one of said shafts, the fork bracket (302) comprising, opposite in planar symmetry, two bearing surfaces on which the finger presses respectively to proceed with the coupling or the uncoupling, **characterized in that** the finger presses on the two bearing surfaces of the fork holder through the intermediary area, respectively, of two convex generatrix cylindrical surfaces (1103d, 1103e) opposite in the same planar symmetry, the convex generatrix surfaces (1103d, 1103e) having a distal section of constant curvature (1103d) to press on the surface of corresponding support during a rotation of the finger (1103) to engage a first of the two reports and the method is such that material is removed to define a proximal section (1103e) of profile flatter than that of the distal section of constant curvature (1103d) to release a space between the bearing surface of the corresponding fork (302) and the finger (1103) after a rotation of the finger (1103) to engage a second of the two reports.
